# EUROPÄISCHE PATENTSCHRIFT

(11) **EP 0 502 875 B1**
(45) Veröffentlichungstag und Bekanntmachung des Hinweises auf die Patenterteilung: **10.08.1994**
(21) Anmeldenummer: 90917029.2
(22) Anmeldetag: 23.11.1990
(51) Int. Cl.: F02D 41/22, F02D 11/10

(54) **SICHERHEITSSYSTEM FÜR EINEN SCHRITTMOTORANTRIEB**
SAFETY SYSTEM FOR A STEPPER-MOTOR DRIVE
SYSTEME DE SECURITE POUR COMMANDE DE MOTEUR PAS A PAS

(30) Priorität: 28.11.1989 EP 89121926; 30.08.1990 DE 9012436 U
(43) Veröffentlichungstag der Anmeldung: 16.09.1992
(73) Patentinhaber: SIEMENS AKTIENGESELLSCHAFT, 80333 München (DE)
(72) Erfinder: BINNEWIES, Ludwig, D-8417 Lappersdorf (DE); FRINZEL, Udo, D-8679 Oberkotzau (DE); SCHREIBER, Hans, D-8411 Lappersdorf (DE); ZIMMER, Herbert, D-8400 Regensburg (DE); NOICHL, Andreas, A-1150 Wien (AT); TREFALT, Manfred, A-1160 Wien (AT); TURBA, Roman, A-1190 Wien (AT)
(86) Internationale Anmeldenummer: EP9002002
(87) Internationale Veröffentlichungsnummer: WO9108391

(56) Entgegenhaltungen:
- EP-A- 0 313 659
- US-A- 4 548 176
- Patent Abstracts of Japan, Band 11, Nr. 347 (M-641)(2794), 13. November 1987, & JP-A-62126240 (TOYOTA), 8. Juni 1987

## Beschreibung

Die Erfindung betrifft ein Sicherheitssystem für einen Schrittmotorantrieb gemäß Oberbegriff von Anspruch 1 (vergl. Abstract der JP-A-62 126 240).

Bei einem sogenannten elektrischen Gaspedal wird die Drosselklappe von einem Elektromotor, z. B. einem 2 phasigen Schrittmotor, verstellt. Dieser arbeitet beim Öffnen der Drosselklappe gegen die Kraft einer Feder. Der Strom durch die einzelnen Wicklungen des Schrittmotors wird über eine Steuerung und eine jeweils zugeordnete Endstufe so eingestelllt, daß ein Drehfeld für die Bewegung des Schrittmotors erzeugt wird.

Tritt beim Schrittmotor oder einer der Endstufen oder einer Verbindungsleitung ein elektrischer Fehler auf, so kann das Drehfeld nicht mehr richtig gesteuert werden. Die Steuerung wird dann abgeschaltet und die Feder zieht den nun stromlosen Motor in eine Position, die der Schließstellung der Drosselklappe entspricht.

Bei einem solchen Fehlerfall wird also die Drosselklappe geschlossen und ist dann nicht mehr weiter bedienbar. Das Kraftfahrzeug kann damit erst nach Reparatur wieder benutzt werden.

Die Aufgabe der Erfindung besteht demgegenüber darin, einen Schrittmotorantrieb so auszuführen, daß im Fehlerfall die Bedienbarkeit erhalten bleibt.

Die erfindungsgemäße Lösung ist im Anspruch 1 gekennzeichnet. Vorteilhafte Weiterbildungen der Erfindung finden sich in den Unteransprüchen.

Auch bei Ausfall nur einer Wicklung eines 2 phasigen Schrittmotors ist dessen Betrieb nicht mehr richtig gewährleistet. Man könnte nun daran denken, einen zweiten redundanten Schrittmotor vorzusehen, der bei Ausfall des ersten Schrittmotors dessen Funktion übernimmt. Eine solche Lösung ist jedoch sehr aufwendig und teuer.

Zudem bedingt die erhöhte Anzahl von Bauelementen (z.B. Lager) eine geringere Zuverlässigkeit, da der Ausfall auch nur eines Lagers die gesamte Anordnung blockieren kann.

Die erfindungsgemäße Lösung wählt daher einen anderen Weg, nämlich den Schrittmotor quasi intern in getrennte Teilmotoren aufzuteilen. Dazu wird jede Wicklung des Schrittmotors in zwei oder mehrere Teilwicklungen unterteilt. Jeder der Teilwicklungen ist eine eigene Endstufe zugeordnet.

Bei zwei solchen Teilwicklungen beispielsweise kann dann bei Ausfall einer der Teilwicklungen oder der ihr zugeordneten Endstufe die verbleibende Teilwicklung die Funktion mindestens teilweise übernehmen.

Die Teilwicklungen sowie ihre Steuerströme können so dimensioniert sein, daß durch jeweils eine Teilwicklung auf jedem Pol im Normalbetrieb des Motors das nötige Normalmoment aufgebracht wird, also durch die jeweilige zweite Teilwicklung eine echte Redundanz vorliegt.

Die Dimensionierung kann aber auch so sein, daß erst die Summe der resultierenden Teilmomente aller Teilwicklungen dem benötigten Normalmoment entspricht. In diesem Fall geht zwar bei Ausfall einer der Teilwicklungen ein gewisser Dynamikumfang bei der Steuerbarkeit des Schrittmotors verloren, jedoch die Steuerbarkeit an sich bleibt erhalten. Dieser Dynamikverlust kann jedoch vermieden werden, wenn der Strom durch die verbleibende intakte Teilwicklung auf einem Pol so erhöht wird, daß dadurch die Wirkung der ausgefallenen Teilwicklung ganz oder teilweise kompensiert wird. Für die Dimensionierung und die Anordnung der einzelnen Teilwicklungen sind vielerlei Möglichkeiten denkbar.

Die Wicklungszahlen können z.B. gleich oder ungleich sein. Dementsprechend sind dann auch die zugehörigen Steuerströme gleich bzw. ungleich. Die Teilwicklungen können auf jedem Pol nebeneinander oder auch übereinander angeordnet sein. Genauso können zwei oder mehrere Teilwicklungen auf verschiedenen Polen eine Wicklung bilden.

Eine Überwachungseinrichtung überwacht jede Teilwicklung auf Ausfall, indem sie beispielsweise prüft, ob durch eine Teilwicklung ein Strom fließt, wenn die zugehörige Endstufe von der Steuerung angesteuert wird. Bei einem Ausfall erzeugt sie ein Notsignal und leitet dieses an die Steuerung des Schrittmotors weiter. Die Steuerung ändert daraufhin die Höhe des Stroms durch die verbleibende Teilwicklung auf dem Pol mit der ausgefallenen Teilwicklung, so daß deren Wirkung kompensiert wird.

Die Erfindung wird anhand der Figuren näher erläutert. Dabei zeigen
- Figur 1: eine schematische Darstellung für ein elektrisches Gaspedal mit einem Schrittmotorantrieb gemäß dem Stand der Technik,
- Figur 2: eine schematische Darstellung eines elektrischen Gaspedals mit einem Schrittmotorantrieb gemäß der Erfindung,
- Figur 3: eine vektorielle Darstellung der Momente für einen Normalbetrieb und einen Notbetrieb des Schrittmotorantriebs gemäß Figur 1,
- Figur 4: eine vektorielle Darstellung der Momente für den Normalbetrieb und den Notbetrieb des Schrittmotorantriebs gemäß Figur 2 und
- Figur 5, 6, 7: je eine Ausführungsform für die Anordnung der Teilwicklungen.

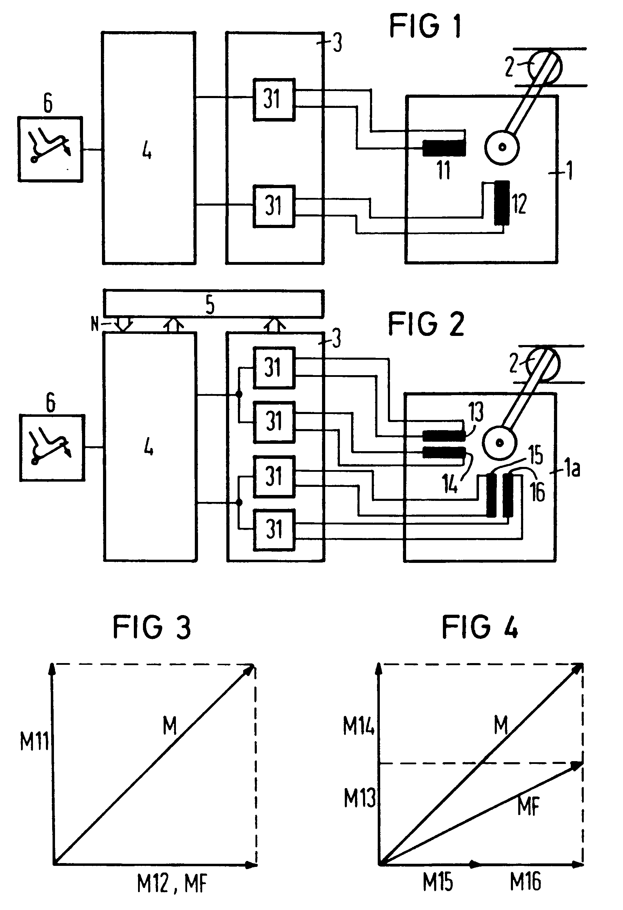

Das in Figur 1 dargestellte elektrische Gaspedal für ein Fahrzeug enthält ein Fahrpedal 6, eine Steuerung 4, eine Endstufenanordnung 3, einen Schrittmotor 1 sowie eine Drosselklappe 2. Die Drosselklappe 2 sitzt direkt auf der Welle des Schrittmotors 1. Der Schrittmotor 1 ist zweiphasig mit zwei Wicklungen 11, 12 die jeweils von einer eigenen Endstufe 31 der Endstufenanordnung 3 mit Strom versorgt werden.

Der Fahrer bestimmt über die Stellung des Fahrpedals 6 die Winkelposition der Drosselklappe 2. Diese Stellung wird als elektrisches Signal der Steuerung 4 zugeführt, die demgemäß die Endstufenanordnung 3 ansteuert. Über die einzelnen Endstufen 31 werden dann die Ströme durch die Wicklungen 11, 12 so eingestellt, daß sich die gewünschte Winkelposition des Schrittmotors 1 und damit der mit ihm verbundenen Drosselklappe 2 ergibt.

In Figur 3 ist ein Beispiel für einen Normalbetrieb aufgetragen, bei dem die Wicklungen 11 und 12 von ihren jeweiligen Endstufen 31 her gleichmäßig mit Strom versorgt werden. Die resultierenden Teilmomente M11 und M12 der beiden Wicklungen 11, 12 ergeben dabei ein Normalmoment M, nach dessen Richtung sich der drehbare Teil des Schrittmotors ausrichtet.

Es sei nun angenommen, daß beispielsweise die Wicklung 11 ausfällt. Dies kann entweder durch einen elektrischen Fehler in der Wicklung 11 selbst oder in der sie ansteuernden Endstufe 31 oder in der Zuleitung bedingt sein. Das Moment MF für diesen Fehlerfall ist dann gemäß Figur 3 gleich dem Teilmoment M12. Sobald sich der Schrittmotor gemäß diesem neuen Moment MF ausgerichtet hat, kann er aus dieser neuen Lage nicht mehr herausbewegt werden, da über die Wicklung 12 allein das Moment MF nur noch betragsmäßig aber nicht mehr richtungsmäßig geändert werden kann.

Ein solcher Fehlerfall stellt auch einen sicherheitskritischen Zustand dar. Je nachdem, welche der beiden Wicklungen 11, 12 ausfällt, zieht der Schrittmotor schlagartig die Drosselklappe 2 in Richtung des verbleibenden Moments. Dies kann, wenn das verbleibende Moment kleiner als das Federrückstellmoment ist, ein schlagartiges Schließen der Drosselklappe bedeuten und daher je nach Verkehrsituation sehr gefährlich sein.

In Figur 2 ist nun ein elektrisches Gaspedal mit einem Schrittmotorantrieb gemäß der Erfindung dargestellt. Gleiche Teile sind dabei mit gleichen Bezugszeichen versehen. Die Wicklung 11 aus Figur 1 ist hier durch zwei Teilwicklungen 13 und 14 ersetzt, die jeweils von einer eigenen Endstufe 31 angesteuert werden. Gleichermaßen ist die Wicklung 12 aus Figur 1 durch die Teilwicklungen 15 und 16 ersetzt.

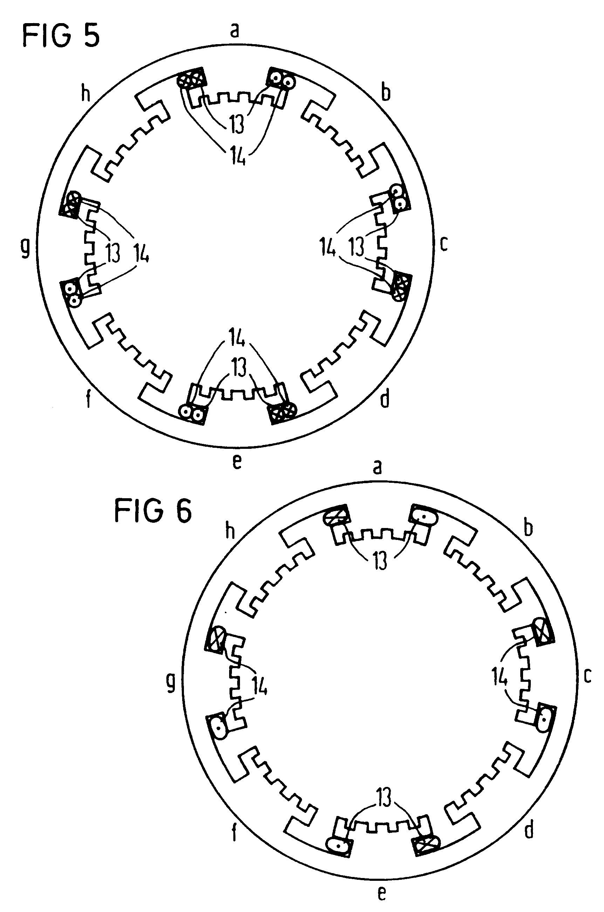

Drei Ausführungsbeispiele für mögliche Anordnungen der Teilwicklungen 13-16 auf den Polen des Stators eines Schrittmotors 1 sind in den Figuren 5, 6 und 7 dargestellt. Der Stator 1 weist dabei jeweils acht Pole a-h auf. Aus Gründen der Übersichtlichkeit sind dabei jeweils nur die Teilwicklungen 13 und 14 auf den Polen a, c, e und g dargestellt, die die Wicklung 11 aus Figur 1 ersetzen. Die weggelassenen Teilwicklungen 14 und 16 sind analog auf den Polen b, d, f und h angeordnet.

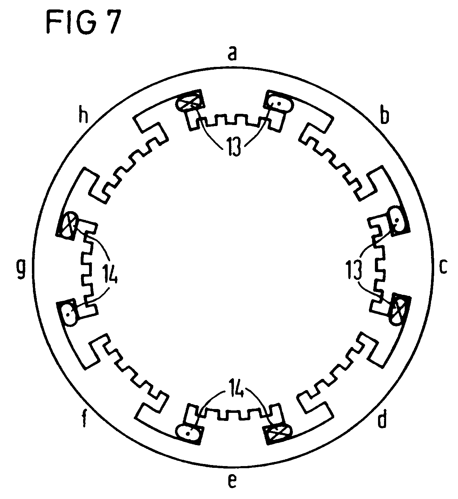

Gemäß Figur 5 sind die einzelnen Polwicklungen der Teilwicklungen 13 und 14 jeweils auf denselben Polen elektrisch voneiander isoliert angeordnet. Die Verbindungsleitungen zwischen den einzelnen Polen sind, wie auch in den Figuren 6 und 7, nicht gezeigt.

Bei dieser Ausführungsform besteht jedoch eine elektromagnetische Kopplung der beiden Teilwicklungen 13 und 14. Diese Kopplung führt zu einer gegenseitigen Beeinflussung der jeweils zugeordneten Endstufen 31, da beide Teilwicklungen 13, 14 vom gleichen Magnetfluß durchsetzt werden. Kleine Streuflüsse sind dabei nicht berücksichtigt.

Gemäß einer zweiten Ausführungsform nach Figur 6 ist daher die Teilwicklung 13 auf die Pole a und e verteilt und die Teilwicklung 14 auf die Pole c und g. Diese räumliche Trennung bewirkt eine Reduzierung der gegenseitigen Beeinflussung.

Eine bevorzugte Ausführungsform gemäß Figur 7 bewirkt schließlich eine fast gänzliche Reduzierung der gegenseitigen Beeinflussung. Die Teilwicklung 13 befindet sich dabei auf den Polen a und c und die Teilwicklung 14 auf den Polen e und g. Dadurch wird die rechte, obere Hälfte des Schrittmotors 1 von der Teilwicklung 13 und die linke, untere Hälfte von der Teilwicklung 14 magnetisch in Anspruch genommen. Die Teilwicklungen 13 und 14 sind also magnetisch weitgehend entkoppelt.

Die Teilwicklungen 13 und 14 haben die gleiche Windungszahl und den gleichen Wicklungssinn. Gleiches gilt wiederum für die Teilwicklungen 15 und 16. Jede der Teilwicklungen 13 bis 16 sowie ihre Steuerströme sind so bemessen, daß sie jeweils 50% des Teilmoments einer der Wicklungen 11, 12 aus Figur 1 ergeben.

Dadurch ergibt sich, wie Figur 4 zeigt, im Normalbetrieb das gleiche Normalmoment M wie in Figur 3.

Für den Fehlerfall sei diesmal angenommen, daß die Teilwicklung 14 ausfällt. Gemäß Figur 4 resultiert dann durch den Wegfall des Teilmomentes M14 das neue Moment MF für diesen Fehlerfall. Die Steuerbarkeit des Schrittmotors 1a bleibt also bestehen, da durch die verbleibende Teilwicklung 13 weiter eine richtungsmäßige Änderung des Moments MF möglich ist. Lediglich der Dynamikumfang ist durch den Wegfall des Teilmoments M 14 eingeschränkt.

Ein sicherheitskritisches Verhalten wie beim Stand der Technik tritt also bei einem Schrittmotorantrieb gemäß der Erfindung nicht auf. Zum einen tritt im Fehlerfall immer nur eine bestimmte Betragsänderung der Winkelstellung der Drosselklappe 2 ein und niemals ein ruckartiges Schließen. Zum anderen kann der Fahrer auf diese betragsmäßige Änderung der Winkelstellung der Drosselklappe 2 reagieren, da sie über das Fahrpedal 6 weiter steuerbar bleibt.

Eine Überwachungseinrichtung 5 ist an die Endstufenanordnung 3 und die Steuerung 4 angeschlossen. Von der Endstufenanordnung 3 erhält sie darüber eine Information über die Stromflüsse in den Zuleitungen zwischen den Endstufen 31 und den zugehörigen Teilwicklungen 13 bis 16. Von der Steuerung 4 erhält sie die Information über die Steuersignale, die die Steuerung 4 an alle einzelnen Endstufen 31 ausgibt.

Die Überwachungseinrichtung 5 prüft, ob die jeweiligen Steuersignale für die Endstufen 31 einen entsprechenden Stromfluß durch eine der Teilwicklungen 13 bis 16 bewirken. Ist dies bei einer der Teilwicklungen 13 bis 16 nicht der Fall, so liegt ein Fehler entweder bei der zugehörigen Endstufe 31, der Teilwicklung 13 bis 16 oder der Zuleitung vor.

Die Überwachungseinrichtung 5 erzeugt in diesem Fehlerfall ein Notsignal N und gibt dieses an die Steuerung 4 weiter. Dieses Notsignal N beinhaltet die Information, welche der Teilwicklungen 13 bis 16 betroffen ist.

Die Steuerung 4 führt daraufhin einen Notbetrieb durch. Im obengenannten Fehlerfall beispielsweise - Teilwicklung 14 defekt - veranlaßt sie die der Teilwicklung 13 zugeordnete Endstufe 31 die Teilwicklung 13 mit einem doppelt so hohen Strom zu versorgen wie im Normalbetrieb. Durch das solchermaßen verdoppelte Teilmoment M13 wird die Wirkung der ausgefallenen Teilwicklung 14 kompensiert.

Die Funktionen der Steuerung 4, sowie der Überwachungseinrichtung 5 übernimmt ein Rechner mit entsprechender Ein- und Ausgangsbeschaltung. Die Abfrage der einzelnen Teilwicklungsströme zu den Teilwicklungen 13 bis 16 erfolgt über jeweils eine Strommessung auf der entsprechenden Zuleitung.

## Patentansprüche

1. Sicherheitssystem für einen Schrittmotorantrieb, insbesondere in einem Kraftfahrzeug,
- mit einem zweiphasigen Schrittmotor (1) mit zwei Wicklungen, wobei jede der Wicklungen auf mindestens zwei Polen verteilt ist,
- mit einer Steuerung (4) und einer Endstufenanordnung (3) zur Einstellung von Strömen durch die Wicklungen und einer Überwachungseinrichtung
**dadurch gekennzeichnet**,
- daß die Wicklungen in jeweils mindestens zwei Teilwicklungen unterteilt sind,
- daß die Endstufenanordnung (3) für jede Teilwicklung (13-16) eine eigene Endstufe (31) enthält,
- daß die Steuerung (4) den Strom durch jede Teilwicklung (13-16) in einem Normalbetrieb so einstellt, daß sich ein Normalmoment als Summe von Teilmomenten ergibt,
- daß die Überwachungseinrichtung (5) die Funktion der einzelnen Teilwicklungen (13 bis 16) überwacht und bei Ausfall einer der Teilwicklungen (13 bis 16) ein Notsignal (N) an die Steuerung (4) gibt und
- daß die Steuerung (4) bei vorhandenem Notsignal (N) den Strom durch die verbleibende Teilwicklung derjenigen Wicklung, die die ausgefallene Teilwicklung umfaßt, in einem Notbetrieb so steuert, daß diese mindestens teilweise deren Funktion übernimmt.

2. Sicherheitssystem nach Anspruch 1,
**dadurch gekennzeichnet**,
daß jeweils mindestens zwei auf denselben Polen befindliche Teilwicklungen eine der Wicklungen bilden.

3. Sicherheitssystem nach Anspruch 1,
**dadurch gekennzeichnet**,
daß jeweils mindestens zwei auf verschiedenen Polen befindliche Teilwicklungen eine der Wicklungen bilden.

4. Sicherheitssystem nach Anspruch 2 oder 3,
**dadurch gekennzeichnet**,
daß die Teilwicklungen (13 bis 16) jeweils gleich sind.

5. Sicherheitssystem nach Anspruch 2,
**dadurch gekennzeichnet**,
daß die Teilwicklungen (13 bis 16) auf jedem Pol gleichsinnig gewickelt sind und nebeneinander liegen.

6. Sicherheitssystem nach Anspruch 2,
**dadurch gekennzeichnet**,
daß die Teilwicklungen (13 bis 16) auf jedem Pol gleichsinnig übereinander gewickelt sind.

7. Sicherheitssystem nach Anspruch 2 oder 3,
**dadurch gekennzeichnet**,
daß im Normalbetrieb jeweils nur eine der Teilwicklungen einer Wicklung mit Strom versorgt wird und bei ihrem Ausfall im Notbetrieb eine andere Teilwicklung derselben Wicklung deren Funktion übernimmt.

8. Sicherheitssystem nach Anspruch 2 oder 3,
**dadurch gekennzeichnet**,
daß im Normalbetrieb alle Teilwicklungen einer Wicklung mit Strom versorgt werden und im Notbetrieb die verbleibenden Teilwicklungen mit einem erhöhten Strom versorgt werden, sodaß sie die Wirkung der ausgefallenen Teilwicklung kompensieren.

## Claims

1. Safety system for a stepper-motor drive, in particular in a motor vehicle,
- having a two-phase stepper motor (1) with two windings, each of the windings being distributed on at least two poles,
- having a controller (4) and an output stage arrangement (3) for adjusting currents through the windings, and a monitoring device,
characterized in that
- the windings are subdivided in each case into at least two part-windings,
- the output stage arrangement (3) contains a dedicated output stage (31) for each part-winding (13-16),
- the controller (4) adjusts the current through each part-winding (13-16) in normal operation so as to produce a nominal torque as the sum of component torques,
- the monitoring device (5) monitors the functioning of the individual part-windings (13-16) and, in the event of failure of one of the part-windings (13-16), transmits an alarm signal (N) to the controller (4), and
- in the presence of an alarm signal (N), the controller (4), in emergency operation, controls the current through the remaining part-winding of that winding which comprises the failed part-winding in such a way that said part-winding takes over the function thereof, at least partly.

2. Safety system according to Claim 1, characterized in that in each case at least two part-windings located on the same poles form one of the windings.

3. Safety system according to Claim 1, characterized in that in each case at least two part-windings located on different poles form one of the windings.

4. Safety system according to Claim 2 or 3, characterized in that the part-windings (13-16) are identical in each case.

5. Safety system according to Claim 2, characterized in that the part-windings (13-16) are wound in the same sense on each pole and are located next to one another.

6. Safety system according to Claim 2, characterized in that the part-windings (13-16) are wound above one another in the same sense onto each pole.

7. Safety system according to Claim 2 or 3, characterized in that in normal operation only one of the part-windings of a winding is supplied in each case with current, and in the event of its failure a different part-winding of the same winding takes over its function in emergency operation.

8. Safety system according to Claim 2 or 3, characterized in that in normal operation all the part-windings of a winding are supplied with current, and in emergency operation the remaining part-windings are supplied with an increased current, so that they compensate the effect of the failed part-winding.

## Revendications

1. Système de sécurité pour un dispositif d'entraînement par moteurs pas-à-pas, notamment dans un véhicule automobile, comprenant
- un moteur pas-à-pas (1) biphasé comportant deux enroulements, dont chacun est réparti sur au moins deux pôles,
- une unité de commande (4) et un dispositif à étages finals (3) pour le réglage de courants circulant dans les enroulements, et un dispositif de contrôle,
caractérisé par le fait
- que les enroulements sont subdivisés en respectivement au moins deux enroulements partiels,
- que le dispositif à étages finals (3) contient un étage final particulier (31) pour chaque enroulement partiel,
- que l'unité de commande (4) règle le courant circulant dans chaque enroulement partiel (13 à 16) pendant un fonctionnement normal de manière à obtenir un moment normal en tant que somme de moments partiels,
- que le dispositif de contrôle (5) contrôle le fonctionnement des enroulements partiels individuels (13 à 16) et, en cas de défaillance de l'un des enroulements partiels (13 à 16), envoie un signal d'urgence (N) à l'unité de commande (4), et
- que, en présence d'un signal d'urgence (N), l'unité de commande (4) commande le courant circulant dans l'enroulement partiel restant de l'enroulement qui contient l'enroulement partiel défaillant, en fonctionnement d'urgence de sorte qu'il en prenne en charge la fonction au moins en partie.

2. Système de sécurité suivant la revendication 1, caractérisé par le fait qu'au moins deux enroulements partiels se trouvant sur les mêmes pôles forment l'un des enroulements.

3. Système de sécurité suivant la revendication 1, caractérisé par le fait qu'au moins deux enroulements partiels se trouvant sur des pôles différents forment l'un des enroulements.

4. Système de sécurité suivant la revendication 2 ou 3, caractérisé par le fait que les enroulements partiels (13 à 16) sont tous identiques.

5. Système de sécurité suivant la revendication 2, caractérisé par le fait que les enroulements partiels (13 à 16) sont enroulés dans le même sens sur chaque pôle et sont disposés côte-à-côte.

6. Système de sécurité suivant la revendication 2, caractérisé par le fait que les enroulements partiels (13 à 16) sont enroulés dans le même sens en superposition sur chaque pôle.

7. Système de sécurité suivant la revendication 2 ou 3, caractérisé par le fait que, en fonctionnement normal, seul l'un des enroulements partiels d'un enroulement est alimenté en courant et que, lors de sa défaillance, en fonctionnement d'urgence, un autre enroulement partiel du même enroulement en prend en charge la fonction.

8. Système de sécurité suivant la revendication 2 ou 3, caractérisé par le fait que dans le fonctionnement partiel, tous les enroulements partiels d'un enroulement sont alimentés en courant et que, en fonctionnement d'urgence, les autres enroulements partiels sont alimentés par un courant plus grand de sorte qu'ils compensent l'action de l'enroulement partiel défaillant.
